# EUROPEAN PATENT APPLICATION

(11) **EP 2 110 578 A2**
(43) Date of publication of application: **21.10.2009**
(21) Application number: 09005389.3
(22) Date of filing: 15.04.2009
(51) Int. Cl.: F16H 3/00, F16H 3/089

(54) **Dual clutch type automated transmission apparatus**

(30) Priority: 16.04.2008 JP 2008106990
(71) Applicant: AISIN AI Co., Ltd., Nishio-shi, Aichi-ken (JP)
(72) Inventor: Toyoda, Hiroshi, Nishio-shi Aichi-ken (JP); Ogami, Shiro, Nishio-shi Aichi-ken (JP); Fukuhara, Yuichi, Nishio-shi Aichi-ken (JP)
(74) Representative: Marshall, John Grahame

(57) **Abstract**

A dual clutch type automated transmission apparatus (1, 1X) includes first and second input shafts (3, 4), an output shaft (5), a dual clutch mechanism (2) having a first clutch actuator (25, 26) operating a first clutch portion (C1, C2) for establishing/interrupting a first torque transmitting path and a second clutch actuator (26, 25) operating a second clutch portion (C2, C1) for establishing/interrupting a second torque transmitting path, plural first gear trains (71A-76A, 71P-76P), plural first connecting portions (81, 82, 83) selectively connecting/disconnecting the first and second input shafts (3, 4) to/from the output shaft (5) via one of the first gear trains (71A-76A, 71 P-76P), a second gear train (77A, 77P) provided between the first input shaft (3, 4) and the output shaft (5), and a second connecting portion (77M, 85. 77X, 85X, 89) provided at the second gear train (77A, 77P) and connected to the second clutch actuator (26, 25). The second clutch actuator (26, 25) operates the second connecting portion (77M, 85, 77X, 85X, 89) to connect/disconnect the first input shaft (3, 4) to/from the output shaft (5) via the second gear train (77A, 77P) while operating the second clutch portion (C2, C1) to interrupt the second torque transmitting path.

## Description

### FIELD OF THE INVENTION

The present invention generally relates to a dual cutch type automated transmission apparatus.

### BACKGROUND

As an example of an automated transmission apparatus for a vehicle, a dual clutch type automated transmission apparatus has been proposed. Such dual clutch type automated transmission apparatus includes a dual clutch mechanism having first and second clutch portions, and a transmitting portion having plural speed shift gears mounted onto first and second input shafts and an output shaft. The dual clutch type automated transmission apparatus has an advantage of allowing a speed changing operation to be executed without interrupting a continuous torque transmission by selectively establishing torque transmitting paths by means of the first and second clutch portions. A frictional clutch mechanism, which includes a driving frictional plate and a driven frictional plate and which synchronizes rotations thereof by frictionally engaging the driving frictional plate and the driven frictional plate with each other thereby transmitting a torque, is employed for the dual clutch mechanism, for example. Further, the first clutch portion is arranged to transmit torque to the first input shaft, while the second clutch portion is arranged to transmit the torque to the second input shaft, i.e., the first and second clutch portions transmits the torque to different input shafts. Accordingly, the first and second input shafts are structured to rotate independently from each other. Driving gears are mounted onto each of the first and second input shafts, while driven gears are mounted onto the output shaft. The driving gears are engaged with corresponding driven gears directly or indirectly via other gears, thus arranged to establish (generally) four to seven gear trains. Further, a reverse gear train is established by rotating the output shaft In a reversed direction. More specifically, an idle gear is provided between a driving gear and a driven gear for reversing movement (hereinafter, referred to as reverse driving gear and reverse driven gear). When the idle gear is engaged with the reverse driving gear and the reverse driven gear, the reverse gear train is established and the output shaft is driven to rotate in the reversed direction. A selecting operation and a shifting operation of such gear trains for transmitting the torque are executed by a known synchromesh mechanism, and an electronic control device controls operations of the first and second clutch portions, the synchromesh mechanism, and the like, i.e., the dual clutch type transmitting mechanism is an automated transmitting mechanism.

As an example of such dual clutch type automated transmission apparatus, the applicant of the present invention has disclosed an automated transmission apparatus for a vehicle in JP2004-332840A (hereinafter, referred to as reference 1). The reference 1 relates to an allocation of gear trains mounted onto each of the first and second input shafts for achieving a jump shift operation. According to the reference 1, six forward gear trains (for first to sixth speed shift stages) and one reverse gear train are provided so as to selectively establish torque transmitting paths by four synchronizing apparatuses.

The synchromesh mechanism is a principal example of such synchronizing apparatus. More specifically, the synchromesh mechanism includes a sleeve member which is movable in first and second axial directions for selectively synchronously engaging the input shaft and one of speed shift gears, which are respectively provided at both axial sides of the synchromesh mechanism, so that the one of the speed shift gears is shifted from being in an idling state to an engaged state. Thus, two speed shift gears are operated by one synchromesh mechanism. In general, the sleeve member of each synchromesh mechanism is individually operated by an actuator such as a motor or a hydraulic system, whereas the gear train of a reverse shift stage is selected and established by a simple mechanism such as a slidable engagement mechanism without using such synchromesh mechanism.

In a structure where the number of shift stages of such dual clutch type automated transmission apparatus is increased, the number of the synchronizing apparatus and the number of the actuators are also increased. In other words, the number of components of the dual clutch type automated transmission apparatus is increased, thereby increasing volume, weight and cost of the dual clutch type automated transmission apparatus. Particularly in a structure where the number of the gear trains provided on the shafts (including the reverse gear train) is an odd number, one of the synchromesh mechanisms and one of the actuators are provided at only one speed shift gear. Further, the transmitting mechanism may be mounted on the vehicle with difficulty because of an assembling position of the actuator(s).

A need thus exists for a dual clutch type automated transmission apparatus, in which the number of actuators is reduced, for reducing the number of components, volume and cost of the dual clutch type automated transmission apparatus and for Improving an assembling condition thereof.

### SUMMARY OF THE INVENTION

According to an aspect of the present invention, a dual clutch type automated transmission apparatus includes a first input shaft, a second input shaft, an output shaft, a dual clutch mechanism, a plurality of first gear trains, a plurality of first connecting portions, a second gear train and a second connecting portion. The second input shaft is provided for rotating independently from a rotation of the first input shaft. The dual clutch mechanism includes a first clutch portion, a first clutch actuator, a second clutch portion and a second clutch actuator. The first clutch portion is connected to the first input shaft. The first clutch actuator is employed for operating the first clutch portion for establishing and interrupting a first torque transmitting path between the first input shaft and the output shaft. The second clutch portion is connected to the second input shaft. The second clutch actuator is employed for operating the second clutch portion for establishing and interrupting a second torque transmitting path between the second input shaft and the output shaft. The dual clutch mechanism selectively establishes and interrupts the first torque transmitting path between the first input shaft and the output shaft and the second torque transmitting path between the second input shaft and the output shaft. The plurality of first gears is employed for selectively connecting and disconnecting the first and second input shafts to and from the output shaft for transmitting a torque transmitted from the first and second input shafts to the output shaft at a different speed ratio. The plurality of first connecting portions is provided at the plurality of first gear trains for selectively connecting and disconnecting the first and second input shafts to and from the output shaft via one of the plurality of first gear trains. The second gear train is provided between the first input shaft and the output shaft for transmitting the torque transmitted from the first input shaft to the output shaft. The second connecting portion is provided at the second gear train and connected to the second clutch actuator. The second connecting portion is operated by the second clutch actuator to connect and disconnect the first input shaft to and from the output shaft via the second gear train when the second clutch actuator operates the second clutch portion to interrupt the second torque transmitting path between the second input shaft and the output shaft.

According to further aspect of the present invention, the second clutch actuator operates the second connecting portion to connect the first input shaft to the output shaft via the second gear train while interrupting the second torque transmitting path between the second input shaft and the output shaft. At the same time, the first clutch actuator operates the first clutch portion to establish the first torque transmitting path between the first input shaft and the output shaft via the second gear train.

Due to the above described structure, the second clutch actuator for operating the second clutch portion of the dual clutch mechanism 2 is employed for actuating the second connecting portion provided at the second gear train. Accordingly, an additional actuator for actuating the second connecting portion is not necessarily provided. For example when the first clutch portion is in the connected state (engaged state) and one gear train (the second gear train, for example) is established between the first input shaft and the output shaft through one specific connecting portion (the second connecting portion, for example), the first clutch portion is in the connected state thereof by an operation of the first clutch actuator, whereas the second clutch portion is not required to be operated by the second clutch actuator. Accordingly, the specific connecting portion is arranged to be operated by the second clutch actuator. In such structure, the specific connecting portion (the second connecting portion) is arranged to be operated by the second clutch actuator while maintaining the second clutch portion in a released state. Due to such structure, an additional actuator for actuating the specific connecting portion (the second connecting portion) can be omitted.

According to further aspect of the present invention, the second clutch actuator is movable to a first actuating position and to a second actuating position from a neutral position. Further, the second torque transmitting path between the second input shaft and the output shaft is established when the second clutch actuator is located at the first actuating position. Still further, the second connecting portion connects the first input shaft to the output shaft when the second clutch actuator is located at the second actuating position.

Due to the above described structure, the second clutch actuator is arranged to move to the first actuating position from the neutral position and also to the second actuating position from the neutral position. A linear moving clutch actuator, which linearly moves in axial directions, or a rotational clutch actuator, which rotatably moves in first and second rotational directions, and the like, may be employed as such clutch actuator. Thus, any operational mechanism may be provided for transmitting the operational force of an operational mechanism to the first and second clutch portions and the first and second connecting portions. Only the second clutch actuator may be arranged to be movable between the first and second clutch actuating positions. The first clutch actuator may be also arranged to be movable between the first and second clutch actuating positions.

According to further aspect of the present invention, the second gear train includes the reverse gear train.

Generally in the dual clutch type automated transmission apparatus, the torque transmitting path through one of the first and second input shafts is shifted to the torque transmitting path through the other of the first and second input shafts when performing speed shift operations. However, such operation is not performed for the reverse shift stage. Accordingly, the one clutch actuator for one clutch portion, which is in a released state while the other of the clutch portion is in a connected state, is easily applied to the actuator for operating the connecting portion (the second connecting portion) for the reverse gear train. Further, the structure of the operational mechanism is simplified.

According to further aspect of the present invention, the second connecting portion includes a slidable engagement mechanism provided to be separated from the second gear train.
The slidable engagement mechanism slidably moves to engage with the second gear train. Accordingly, the first input shaft and the output shaft are connected to each other via the second gear train, and the first torque transmitting path between the first input shaft and the output shaft is established.

According to further aspect of the present invention, the slidable engagement mechanism includes an operating lever connected to the second clutch actuator, a holder provided at the operating lever, and a shift arm supported by the holder and having the clearance from the holder so as to be movable relative to the holder.

According to further aspect of the present invention, the second connecting portion includes an idle gear and a synchronous connecting mechanism. The idle gear is provided to engage with the second gear train and to idly rotate relative to a rotational shaft onto which the idle gear is mounted. The synchronous connecting mechanism operates the idle gear to be synchronously connected to the rotational shaft. Accordingly, the first input shaft and the output shaft are connected to each other via the second gear train, and the first torque transmitting path between the first input shaft and the output shaft is established.

According to further aspect of the present invention, the synchronous connecting mechanism includes a synchromesh mechanism and a synchronous operating mechanism. The synchromesh mechanism is provided to be separated from the second gear train. The synchronous operating mechanism includes an operating lever connected to the second clutch actuator, a holder provided at the operating lever, and a shift arm for moving the synchromesh mechanism. The shift arm is supported by the holder and includes a clearance from the holder so as to be movable relative to the holder. The synchronous operating mechanism operates the synchromesh mechanism to synchronously connect the idle gear to the rotational shaft. Accordingly, the idle gear rotates with the second gear train, and the first torque transmitting path between the first input shaft and the output shaft is established.

Any possible mechanism may be applied to the second connecting portion which is provided at the second gear train and operated by the second clutch actuator. Specifically, due to the above described structure, the idle gear and the slidable engagement mechanism for slidably moving, the idle gear are employed for the second connecting portion. When the second clutch actuator operates the slidable engagement mechanism to move the idle gear, the idle gear is displaced between a driving gear mounted on the first input shaft and a driven gear mounted on the output shaft and is engaged with the driving gear and the driven gear, thereby establishing the second gear train. In place of such slidable engagement mechanism, the synchronous connecting mechanism is applicable to the second connecting portion. Still further, an engaging mechanism including a jaw clutch is also applicable to the second connecting portion in a structure where plural gears of the second gear train are normally engaged with each other.

Thus, due to the above described structures, at least the second clutch actuator is arranged to operate the connecting portion (second connecting portion) of the specific gear train (the second gear train) while maintaining the released state of the second clutch portion. Accordingly, any additional actuator for actuating the second connecting portion can be omitted. Therefore, the number of components, weight, volume and cost of the dual clutch type automated transmission apparatus is effectively reduced, and the assembling condition of the dual clutch type automated transmission apparatus onto the vehicle is also improved.

Specifically in the structure where the specific gear train (second gear train) includes the reverse gear train, the structure of the operational mechanism for transmitting the operational force of the second clutch actuator to the second connecting portion is simplified. Accordingly, the effects described above may be obtained more significantly.

### BRIEF DESCRIPTION OF THE DRAWINGS

The foregoing and additional features and characteristics of the present invention will become more apparent from the following detailed description considered with the reference to the accompanying drawings, wherein:

Fig, 1 is a schematic view illustrating a dual clutch type automated transmission apparatus according to an embodiment of the present invention;

Fig. 2 is an explanatory view schematically illustrating a condition where an up shifting operation for shifting a shift stage from a first shift stage to a second shift stage is performed according to the embodiment;

Fig. 3 is an explanatory view schematically illustrating a condition where a shifting operation for shifting the shift stage from a neutral state to a reverse shift stage is performed according to the embodiment;

Fig. 4 is an explanatory view illustrating a condition where the reverse shift stage is established according to the embodiment;

Fig. 5 is a schematic view illustrating a dual clutch type automated transmission apparatus according to a modified embodiment of the present invention; and

Fig. 6 is an explanatory view illustrating a condition where a reverse shift stage is established according to the modified embodiment.

### DETAILED DESCRIPTION

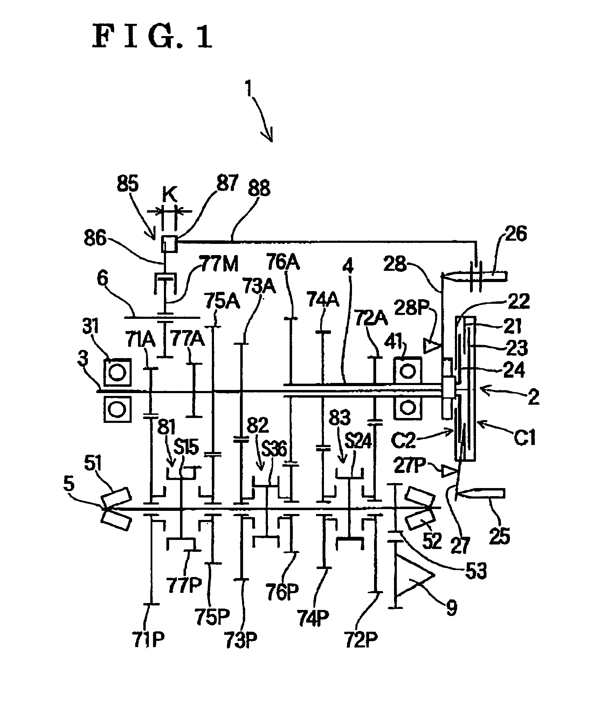

An embodiment of the present invention will be described hereinbelow with reference to Figs. 1 to 4. As illustrated in Fig. 1. in a dual clutch type automated transmission apparatus 1, one shift stage (speed ratio) is selected from among six forward shift stages (hereinafter, referred to as first to sixth speed shift stages) and one reverse shift stage for transmitting a torque of a power source such as an engine to a differential mechanism 9 at the selected speed ratio. The dual clutch type automated transmission apparatus 1 includes a dual clutch mechanism 2, an input shaft (serving as a first/second input shaft) 3, an input shaft (serving as the first/second input shaft) 4, an output shaft 5, a reverse idle shaft (serving as a rotational shaft) 6, six forward gear trains (serving as a plurality of first gear trains) and one reverse gear train (serving as a second gear train). The forward gear trains are structured with first to sixth speed shift driving gears 71A, 72A, 73A, 74A, 75A, 76A and first to sixth speed shift driven gears 71 P, 72P, 73P, 74P, 75P and 76P. The reverse gear train is structured with a reverse driving gear 77A and a reverse driven gear 77P. Further, a reverse idle gear 77M (serving as a second connecting portion) is provided to be separated from the reverse driving gear 77A and the reverse driven gear 77P. The dual clutch type automated transmission apparatus 1 further includes first, second, third synchromesh mechanisms 81, 82 and 83, first, second and third actuators for respectively actuating the first, second, third synchromesh mechanisms 81, 82 and 83, and a slidable engagement mechanism 85, for example. The first, second and third synchromesh mechanisms 81, 82 and 83 (and the first, second and third actuators) serve as a plurality of first connecting portions provided at the plurality of first gear trains, i.e., according to the embodiment, provided at the forward gear trains, for example, while the slidable engagement mechanism 85 serves as the second connecting portion provided at the second gear train i.e., according to the embodiment, provided at the reverse gear train, for example.

The dual clufich mechanism 2 includes a clutch portion (serving as a first/second clutch portion) C1 and a clutch portion (serving as the first/second clutch portion) C2 for selectively transmitting the torque (rotational torque) generated by the power source (such as the engine) to one of the input shafts 3 and 4. A frictional clutch is employed for each of the clutch portions C1 and C2. The clutch portion C1 includes a first driving disc 21 connected to a power source side member and a first driven disc 23 connected to the input shaft 3 and driven by the first driving disc 21. In the same manner, the clutch portion C2 includes a second driving disc 22 connected to the power source side member and a second driven disc 24 connected to the input shaft 4 and driven by the second driving disc 22.

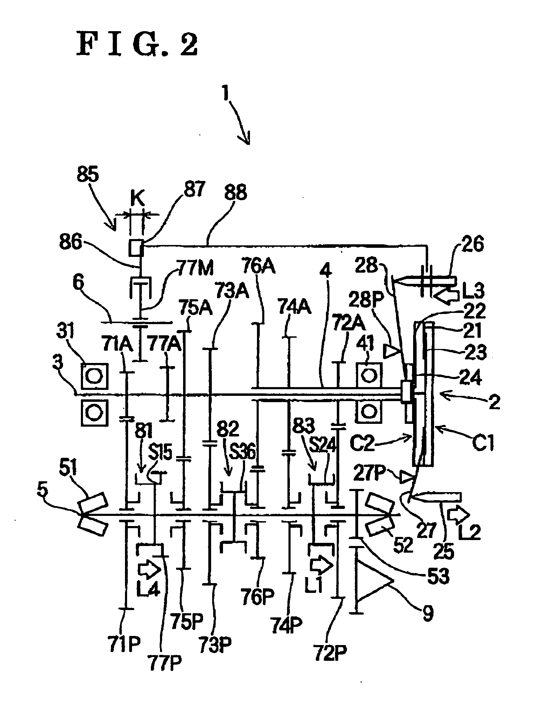

A linear motion one-way actuator (serving as a first/second clutch actuator) 25 is provided for operating the clutch portion C1 for establishing and interrupting a torque transmitting path between the input shaft 3 and the output shaft 5 specifically by connecting and disconnecting the first driving disc 21 and the first driven disc 23 of the clutch portion C1 to and from each other. Further, a release fork 27 is provided for transmitting an operational force of the one-way actuator 25 to the first driving disc 21 of the clutch portion C1. The release fork 27 is pivotably supported by a pivot member 27P. When the one-way actuator 25 moves from a neutral position (a position illustrated in Fig. 1) in a left direction in the drawings and reaches a first clutch connecting position (a left position as illustrated in Fig. 2), the one-way actuator 25 presses a lower end of the release fork 27. The release fork 27 accordingly pivotally moves about the pivot member 27P, and an upper end of the release fork 27 presses the first driving disc 21 of the clutch portion C1 in a right direction. The first driving disc 21 pressed by the release fork 27 frictionally contacts the first driven disc 23, so that the clutch portion C1 is operated to be in a connected state (engaged state) thereof.

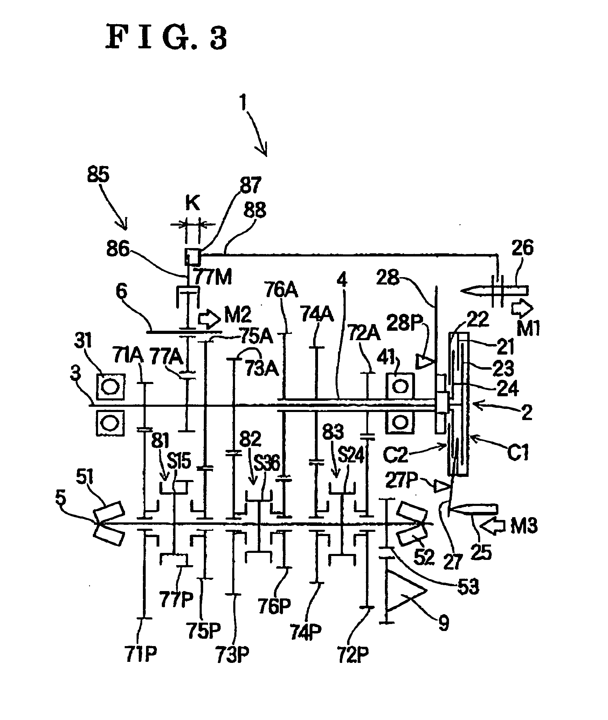

A linear motion two-way actuator (serving as the first/second clutch actuator) 26 is provided for operating the clutch portion C2 for establishing and interrupting a torque transmitting path between the input shaft 4 and the output shaft 5 specifically by connecting and disconnecting the second driving disc 22 and the second driven disc 24 of the clutch portion C2 to and from each other. Further, a release fork 28 is provided for transmitting an operational force of the two-way actuator 26 to the second driving disk 22 of the clutch portion C2. The release fork 28 is pivotably supported by a pivot member 28P. When the two-way actuator 26 moves from a neutral position (a position illustrated in Fig. 1) in the left direction and reaches a second clutch connecting position (a position illustrated in Fig. 2, for example), the two-way actuator 26 presses an upper end of the release fork 28. The release fork 28 accordingly pivotally moves about the pivot center 28P, and a lower end of the release fork 28 presses the second driving disk 22 of the clutch portion C2 in the right direction. The second driving disk 22 pressed by the release fork 28 frictionally contacts the second driven disk 24, so that the clutch portion C2 is operated to be in a connected state (engaged state) thereof. The two-way actuator 26 is movable also in the right direction from the neutral position illustrated in Fig. 1 to reach a reverse gear train connecting position (a position illustrated in Fig. 3, for example). According to the embodiment, the second clutch connecting position serves as a first actuating position, while the reverse gear train connecting position serves as a second actuating position. Details of the movement of the two-way actuator 26 to the reverse gear train connecting positions will be described below.

A piston may be employed for each of the one-way actuator 25 and the two-way actuator 26. Alternatively, a motor may be employed for such actuators 25, 26, and a rotational operational force outputted by the motor may be converted to an axial torque by means of a pinion gear and/or a rack gear.

The input shaft 3 is made from a rod member, while the input shaft 4 is made from a cylindrical member, for example. More specifically, the input shaft 3 is inserted through the input shaft 4 so as to be coaxial therewith. One end portion (a right axial side portion in Fig. 1, for example) of the input shaft 3 is connected to the first driven disc 23 of the clutch portion C1, while another end portion (a left axial side portion in Fig. 1, for example) of the input shaft 3 passes through the input shaft 4 and is supported by a ball bearing 31. One end portion (a right axial side portion in Fig. 1, for example) of the input shaft 4 is connected to the second drive disc 24 of the clutch portion C2 of the dual clutch 2, and an approximately intermediate axial portion of the input shaft 4 is supported by a ball bearing 41. The input shaft 3 and the input shaft 4 rotate independently from each other at different speeds.

The output shaft 5 is provided at a lower side (a lower side in the drawings) of the input shafts 3 and 4, for example, so as to be parallel therewith. One end portion (a left axial side portion in Fig. 1, for example) of the output shaft 5 is supported by a tapered roller bearing 51, while another end portion (a right axial side portion in Fig. 1, for example) of the output shaft 5 is supported by a tapered roller bearing 52. An output gear 53 is fixedly mounted onto a right side portion of the output shaft 5. The output gear 53 is engaged with the differential mechanism 9 for transmitting the torque of the power source to the differential mechanism 9. The reverse idle shaft 6 is arranged to be parallel with each of the input shaft 3, the input shaft 4 and the output shaft 5.

The six forward gear trains are arranged as described below. The first speed shift driving gear 71A, the fifth speed shift driving gear 75A, and the third speed shift driving gear 73A are provided on the input shaft 3 in a sequential order from a left side in the drawings. The first speed shift driven gear 71 P, the fifth speed shift driven gear 75P and the third speed shift driven gear 73P are provided on the output shaft 5 so as to face the first speed shift driving gear 71A, the fifth speed shift driving gear 75A and the third speed shift driving gear 73A, respectively. The sixth speed shift driving gear 76A, the fourth speed shift driving gear 74A, and the second speed shift driving gear 72A are provided on the input shaft 4 in a sequential order from the left side in the drawings. The sixth speed shift driven gear 76P, the fourth speed shift driven gear 74P and the second speed shift driven gear 72P are provided on the output shaft 5 so as to face the sixth speed shift driving gear 76A, the fourth speed shift driving gear 74A and the second speed shift driving gear 72A, respectively.

The first speed shift driven gear 71 P and the fifth speed shift driven gear 75P, which are mounted onto the output shaft 5, are operated by a sleeve S15 of the first synchromesh mechanism 81. The first and fifth speed shift driven gears 71P and 75P are arranged to idle on the output shaft 5 and to be selectively engaged with the output shaft 5 by the sleeve S15 of the first synchromesh mechanism 81. In the same manner, the third speed shift driven gear 73P and the sixth speed shift driven gear 76P are operated by a sleeve S36 of the second synchromesh mechanism 82. The third and sixth speed shift driven gears 73P and 76P are arranged to idle on the output shaft 5 and to be selectively engaged with the output shaft 5 by the sleeve S36 of the second synchromesh mechanism 82. The fourth speed shift driven gear 74P and the second speed shift driven gear 72P are operated by a sleeve S24 of the third synchromesh mechanism 83. The fourth and second speed shift driven gears 74P and 72P are arranged to idly rotate on the output shaft 5 and to be selectively engaged with the output shaft 5 by the sleeve S24 of the third synchromesh mechanism 83. Known actuators are employed for moving the sleeves S15, S36, S24 of the first, second, third synchromesh mechanisms 81, 82 and 83 in both axial directions (in the left and right axial directions in the drawings).

Next, the reverse gear train will be described hereinbelow. The reverse driving gear 77A is provided between the first speed shift driving gear 71A and the fifth speed shift driving gear 75A which are mounted on the input shaft 3. The reverse driving gear 77A is arranged to face the sleeve S15 of the first synchromesh mechanism 81. Further, the reverse driven gear 77P Is provided at an outer circumference of the sleeve S15 of the first synchromesh mechanism 81, while being distant from the reverse driving gear 77A. The reverse idle gear 77M is mounted on the reverse idle shaft 6 so as to be slidably movable in an axial direction of the idle shaft 6. As described above, the reverse idle gear 77M is in a released state when the dual clutch type automated transmission apparatus 1 is in a neutral state as illustrated in Fig. 1.

The slidable engagement mechanism 85 is a mechanism for operating the reverse idle gear 77M to slidably move in the axial direction. The slidable engagement mechanism 85 is structured with a reverse shift arm (serving as a shift arm) 86, an arm holder (serving as a holder) 87 and a reverse operating lever (serving as an operating lever) 88. As illustrated in Fig. 1, a lower side portion of the reverse shift arm 86 is opened in a fork shape. The reverse idle gear 77M is rotatably interposed by the fork shaped lower side portion of the reverse shift arm 86 and is operated to move in the axial direction. On the other hand, an upper side portion of the reverse shift arm 86 is supported by the arm holder 87, while having an axial clearance K within the arm holder 87. The arm holder 87 is connected to one end (according to the embodiment, a left end) of the reverse operating lever 88. Another end of the reverse operating lever 88 is connected to the two-way actuator 26 of the clutch portion C2.

When the two-way actuator 26 of the clutch portion C2 moves in the axial direction (in the left and right directions in the drawings), the operational force of the two-way actuator 26 is transmitted to the reverse idle gear 77M via the reverse operating lever 88 and the reverse shift arm 86. Accordingly, the reverse idle gear 77M and the reverse shift arm 86 are driven to move in the axial direction after the reverse operating lever 88 moves a distance corresponding to the clearance K provided between the arm holder 87 and the reverse shift arm 86. More specifically, for example when the two-way actuator 26 is operated to move in the left direction in the drawings so as to reach the second clutch connecting position for engaging the second driven disc 24 with the second driving disc 22 of the clutch portion C2, the reverse idle gear 77M is operated to move in the left direction at the same time. At this time, no gears are engaged with the reverse idle gear 77M. Therefore, the reverse gear train is not established, and the released state of the reverse idle gear 77M is maintained without interrupting other speed shift gears. When the two-way actuator 26 reaches the reverse gear train connecting position by moving in the right direction in the drawings, the reverse idle gear 77M is located between the reverse driving gear 77A and the reverse driven gear 77P and is engaged therewith by slidably moving in the right direction. Thus, the reverse gear train is established. Thus, the reverse gear train for rotating the output shaft 5 in the reversed rotational direction is selectively established. At this time, the two-way actuator 26 is separated from the release fork 28, and a released state of the clutch portion C2 is maintained.

Next, a method and a process for operating the dual clutch type automated transmission apparatus 1 will be described hereinbelow. First, an upshift operation for establishing the first shift stage from the neutral state (a state illustrated in Fig. 1) will be described. The first shift operation is performed when the vehicle starts to move, for example. In the neutral state illustrated in Fig. 1, both of the clutch portions C1 and C2 are released. Further, each of the first, second and third synchromesh mechanisms 81, 82 and 83 is also in a released state, so that the first, second and third synchromesh mechanisms 81, 82 and 83 idly rotate. Further, the slidable engagement mechanism 85 for the reverse gear train is also in a released state thereof. When a shift command is outputted to establish the first shift stage, the sleeve S15 of the first synchromesh mechanism 81 is operated to move in the left direction so as to select the first speed shift driven gear 71P. Then, the first speed shift driven gear 71 P is synchronously engaged with the output shaft 5, and the first forward gear train for the first shift stage is established. Next, the one-way actuator 25 of the clutch portion C1 is operated to move to the first clutch connecting position, thereby engaging the first driven disc 23 with the first driving disc 21 of the clutch portion C1. Accordingly, a torque transmitting path is established from the power source to the output shaft 5 through the clutch portion C1, the input shaft 3, the first driving gear 71A and the first driven gear 71P. Thus, the upshift operation for establishing the first shift stage from the neutral state is completed and the vehicle accordingly moves forwardly at a first speed.

Second, an upshift operation for changing the shift stage from the first shift stage to the second shift stage will be described with reference to Fig. 2. When an upshift command is outputted while the vehicle moves at the first speed, the sleeve S24 of the second synchromesh mechanism 83 is operated to axially move in the right direction in the drawings as indicated with an arrow L1 so as to select the second speed shift driven gear 72P. The second speed shift driven gear 72P is synchronously connected to the output shaft 5, and the second forward gear train for the second shift stage is accordingly established. Then, the one-way actuator 25 of the clutch portion C1 returns in the right direction as indicated with an arrow L2 illustrated in Fig. 2, and the two-way actuator 26 of the clutch portion C2 is operated to reach the second clutch connecting position by moving in the left direction as indicated with an arrow L3 illustrated in Fig. 2. Accordingly, the clutch portion C1 is released while the second clutch portion is simultaneously engaged as illustrated in Fig. 2 (a transitional state), and the establishment of the torque transmitting path through the first forward gear train is shifted to an establishment of a torque transmitting path through the second forward gear train. Thus, the torque of the power source is transmitted to the output shaft 5 through the clutch portion C2, the input shaft 4, the second driving gear 72A and the second driven gear 72P, and the vehicle accordingly forwardly moves at a second speed. Then, the sleeve S15 of the first synchromesh mechanism 81 returns to a central position as indicated with an arrow L4 and the first speed shift driven gear 71 P is released from the output shaft 5, thereby completing the upshift operation for changing the shift stage from the first shift stage to the second shift stage.

The same operating method and process is applied for performing upshift operations for changing the shift stage from the second shift stage to the third shift stage, from the third shift stage to the fourth shift stage, from the fourth shift stage to the fifth shift stage, and from the fifth shift stage to the sixth shift stage, and also for performing downshift operations for changing the shift stage from the sixth shift stage to the fifth shift stage, from the fifth shift stage to the fourth shift stage, from the fourth shift stage to the third shift stage, from the third shift stage to the second shift stage, from the second shift stage to the first shift stage, and from the first shift stage to a neutral state, so as to selectively establish each forward gear train, and the torque of the power source is transmitted to the output shaft 5 while alternately establishing a torque transmitting path through the input shaft 3 and a torque transmitting path through the input shaft 4. When performing such shift operations for establishing the forward shift stages, the two-way actuator 26 of the clutch portion C2 is operated to move between the central position (neutral position) and the second clutch connecting position (i.e., the axially left side position in the drawings) and is not operated to be located at the reverse clutch connecting position (the axially right side position in the drawings).

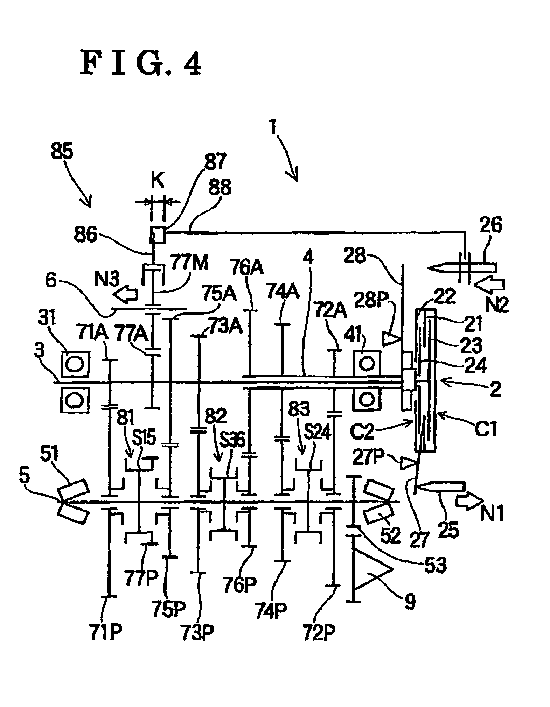

Next, a reverse shift operation for changing the shift stage from the neutral state to the reverse shift stage will be described with reference to Figs. 3 and 4. When a reverse shift command is outputted to establish the reverse shift stage, first, the two-way actuator 26 of the clutch portion C2 is operated to move in the right direction to reach the reverse clutch connecting position as indicated with an arrow M1 illustrated in Fig. 3 so as to select the reverse idle gear 77M. Then, the reverse idle gear 77M is operated to slide in the right direction as indicated with an arrow M2 illustrated in Fig. 3 and is engaged with the reverse driving gear 77A and the reverse driven gear 77P. Thus, the reverse gear train for the reverse shift stage is established. Next, the one-way actuator 25 of the clutch portion C1 is operated to reach the first clutch connecting position by moving in the left direction as indicated with an arrow M3 illustrated In Fig. 3, thereby engaging the clutch portion C1. Accordingly, a reverse torque transmitting path is established from the power source to the output shaft 5 through the clutch portion C1, the input shaft 3, the reverse driving gear 77A, the reverse idle gear 77M and the reverse driven gear 77P, and the reverse shift operation is completed.

Next, a shift operation for returning the shift stage from the reverse shift stage to the neutral state will be described with reference to Fig. 4. When a shift command to return the shift stage from the reverse shift stage to the neutral state is outputted, the one-way actuator 25 of the clutch portion C1 is operated to move in the right direction as indicated with an arrow N1 illustrated in Fig. 4. Then, because the torque of the power source is not inputted to the input shaft 3, the input shaft 3 idly rotates. Accordingly, the reverse driving gear 77A, the reverse idle gear 77M and the reverse driven gear 77P are driven to rotate by a rotational torque transmitted from wheels of the vehicle which rotatably move by inertial force (coasting force) to move the vehicle in a reverse movement direction. Then, the two-way actuator 26 of the clutch portion C2 returns to the central position (the neutral position) as indicated with an arrow N2 illustrated in Fig. 4. Accordingly, the reverse idle gear 77M is operated to slidably move in the axially left direction as indicated with an arrow N3 illustrated in Fig. 4 and is accordingly released from the engagement with the reverse driving gear 77A and the reverse driven gear 77P. Thus, the torque of the power source is not transmitted to the output shaft 5, and the shift operation for returning the shift stage from the reverse shift stage to the neutral state is completed.

Due to the above described structure, because the second and third synchromesh mechanisms 82 and 83 are released when performing the shift operations for changing the shift stage from the neutral state to the reverse shift stage and for returning the shift stage from the reverse shift stage to the neutral state, the torque is not transmitted to the output shaft 5 through the input shaft 4. Accordingly, even in a condition where the two-way actuator 26 of the clutch portion C2 moves towards the second clutch connecting position beyond the neutral position and engages the clutch portion C2 when performing such shift operations for changing the shitt stage between the reverse shift stage and the neutral state, such shift operations are not interrupted.

As described above, according to the embodiment, the two-way actuator 26 (two-way actuator) of the clutch portion C2 is also used for operating the reverse idle gear 77M to slidably move in the axial direction. Accordingly, any additional actuator to be provided only for the reverse gear train is not required. Further, the slidable engagement mechanism 85 for transmitting the operational force of the two-way actuator 26 to the reverse idle gear 77M is structured with a less amount of components, thereby simplifying the structure of the slidable engagement mechanism 85.

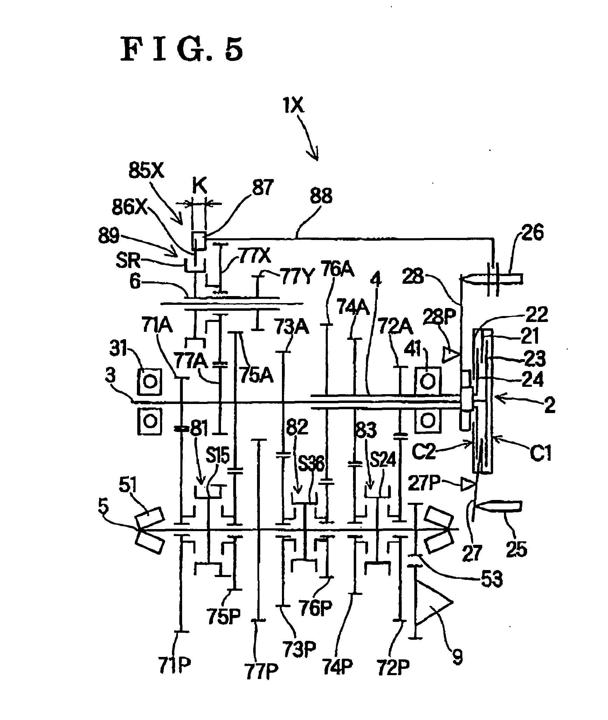

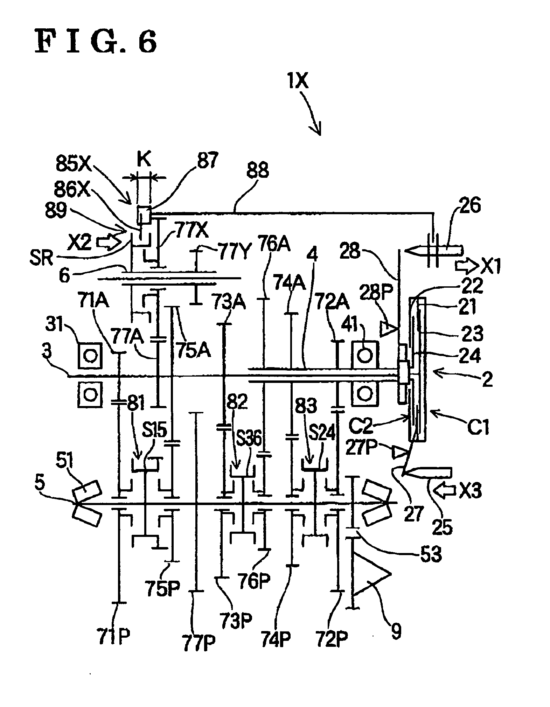

A modified embodiment will be described hereinbelow with reference to Figs. 5 and 6. According to the modified embodiment, a dual clutch type automated transmission apparatus 1X includes a synchronous connecting mechanism (a synchronous operating mechanism 85X and a synchromesh mechanism 89) for the reverse gear train in place of a selecting slide gear set, i.e., in place of the slidable engagement mechanism 85. Other components possessing the same structure of the embodiment described above will be indicated with the same reference numerals, and the detailed description of those components will be omitted herein.

Hereinafter, the reverse gear train according to the modified embodiment will be described. The reverse driving gear 77A is provided between the first driving gear 71A and the fifth driving gear 75A which are mounted on the input shaft 3. A reverse idle gear (serving as the second connecting portion) 77X is mounted on the reverse idle shaft 6 so as to be normally engaged with the reverse driving gear 77A. The reverse idle gear 77X is arranged to be idly rotatable on the reverse idle shaft 6 and to be connectable thereto by the reverse synchromesh mechanism 89. Further, a reverse connecting gear 77Y is also provided on the reverse idle shaft 6 so as to be integral therewith. On the other hand, the reverse driven gear 77P, which is normally engaged with the reverse connecting gear 77Y, is integrally formed on the output shaft 5.

The synchronous operating mechanism 85X is structured with a reverse shift arm (serving as the shift arm) 86X, the arm holder 87 and the reverse operating lever 88. The synchronous operating mechanism 85X is employed for operating a sleeve SR of the reverse synchromesh mechanism 89. As illustrated in Fig. 5, a lower side portion of the reverse shift arm 86X is engaged with the sleeve SR for operating the sleeve SR to move in the axial direction. In the same manner as the embodiment described above, the reverse shift arm 86X is connected to the two-way actuator 26 of the clutch portion C2 via the arm holder 87 and the reverse operating lever 88. According to the modified embodiment, the reverse synchromesh mechanism 89 and the synchronous operating mechanism 85X serve as the second connecting portion.

Next, a shift operation for changing the shift stage from the neutral state to the reverse shift stage will be described with reference to Fig. 6. When a shift command is outputted to establish the reverse shift stage, first, the two-way actuator 26 of the clutch portion C2 is operated to move in the right direction to reach the reverse clutch connecting position as indicated with an arrow X1 illustrated in Fig. 6. Then, the sleeve, SR of the reverse synchromesh mechanism 89 is operated to move in the right direction as indicated with an arrow X2 in Fig. 6, and the reverse idle gear 77X is synchronously connected to the reverse idle shaft 6, Thus, the reverse gear train is established. Next, the one-way actuator 25 of the clutch portion C1 is operated to move in the left direction to the first clutch connecting position as indicated with an arrow X3 in Fig. 6, thereby engaging the clutch portion C1. Accordingly, the torque of the power source is transmitted to the output shaft 5 through the clutch portion C1, the input shaft 3, the reverse driving gear 77A, the reverse idle gear 77X, the reverse idle shaft 6, the reverse connecting gear 77Y and the reverse driven gear 77P. Thus, the shift operation for changing the shift stage from the neutral state to the reverse shift stage is completed, and the vehicle reverses.

Thus, in the structure where the synchronous connecting mechanism (the synchronous operating mechanism 85X and the synchromesh mechanism 89) is employed for the reverse gear train, any additional actuator to be provided only for the reverse gear train is not required.

According to the above described embodiments, one of the input shafts 3 and 4 serves as a first input shaft, while the other of the input shafts 3 and 4 serves as a second input shaft provided for rotating independently from the first input shaft. Further, one of the clutch portions C1 and C2 serves as a first clutch portion connected to the first input shaft, while the other of the clutch portions C1 and C2 serves as a second clutch portion connected to the second input shaft. Still further, one of the clutch actuators 25 and 26 serves as a first clutch actuator for operating the first clutch portion for establishing and interrupting a torque transmitting path between the first input shaft and the output shaft 5, while the other of the clutch actuators 25 and 26 serves as a second clutch actuator for operating the second clutch portion for establishing and interrupting a torque transmitting path between the second input shaft and the output shaft 5. Due to the structure of the embodiments described above, the input shaft 3 serves as the first input shaft, the input shaft 4 serves as the second input shaft, the clutch portion C1 serves as the first clutch portion, the clutch portion C2 serves as the second clutch portion, the clutch actuator 25 serves as the first clutch actuator, and the clutch actuator 26 serves as the second clutch actuator. The reverse gear train (serving as the second gear train) is provided between the input shaft 3 (first input shaft) and the output shaft 5. Still further, the slidable engagement mechanism 85 (serving as the second connecting portion) according to the embodiment, and the synchronous operating mechanism 85X and the reverse synchromesh mechanism 89 (both serving as the second connecting portion) according to the modified embodiment, are connected to the clutch actuator 26 and are thereby operated to connect and disconnect the input shaft 3 (first input shaft) to and from the output shaft 5 when the clutch actuator 26 (second clutch actuator) operates the clutch portion C2 (second clutch portion) to interrupt the torque transmitting path between the input shaft 4 (second input shaft 4) and the output shaft 5. However, the input shaft 4 may serve as the first input shaft, the input shaft 3 may serve as the second input shaft, the clutch portion C2 may serve as the first clutch portion, the clutch portion C1 may serve as the second clutch portion, the clutch actuator 26 may serve as the first dutch actuator, and the clutch actuator 25 serve as the second clutch actuator.

The dual clutch type automated transmission apparatus 1/1X includes the six forward gear trains and one reverse gear train. Thus, as the embodiments described above, particularly in the structure where the number of the gear trains provided at the dual clutch type automated transmission apparatus 1/1X is an odd number, the number of components, volume, cost of the dual clutch type automated transmission apparatus 1/1X are effectively reduced.

Thus, due to the dual clutch type automated transmission apparatus 1/1X according to the embodiments described above, at least the second clutch actuator (the clutch actuator 26) is arranged to operate the connecting portion (second connecting portion) of the specific gear train (second gear train) while maintaining the released state of the second clutch portion (clutch portion C2). Accordingly, any additional actuator for actuating the second connecting portion can be omitted. Therefore, the number of components, the weight, volume and cost of the dual clutch automated transmission apparatus 1/1X is effectively reduced, and the assembling condition of the dual clutch automated transmission apparatus 1/1X onto the vehicle is improved.

Specifically in the structure where the specific gear train (second gear train) includes the reverse gear train, the structure of the operational mechanism for transmitting the operational force of the second clutch actuator to the second connecting portion is simplified. Accordingly, the effects described above may be obtained more significantly.

## Claims

1. A dual clutch type automated transmission apparatus (1, 1X), comprising:
a first input shaft (3, 4);
a second input shaft (4, 3) provided for rotating independently from a rotation of the first input shaft (3, 4);
an output shaft (5);
a dual clutch mechanism (2) comprising:
a first clutch portion (C1, C2) connected to the first input shaft (3, 4);
a first clutch actuator (25, 26) for operating the first clutch portion (C1, C2) for establishing and interrupting a first torque transmitting path between the first input shaft (3, 4) and the output shaft (5);
a second clutch portion (C2, C1) connected to the second input shaft (4, 3); and
a second clutch actuator (26, 25) for operating the second clutch portion (C2, C1) for establishing and interrupting a second torque transmitting path between the second input shaft (4, 3) and the output shaft (5);
the dual clutch mechanism (2) selectively establishing and interrupting the first torque transmitting path between the first input shaft (3, 4) and the output shaft (5) and the second torque transmitting path between the second input shaft (4, 3) and the output shaft (5);
a plurality of first gear trains (71A-76A, 71P-76P) for selectively connecting and disconnecting the first and second input shafts (3, 4) to and from the output shaft (5) for transmitting a torque transmitted from the first and second input shafts (3, 4) to the output shaft (5) at a different speed ratio;
a plurality of first connecting portions (81, 82, 83) provided at the plurality of first gear trains (71A-76A, 71P-76P) for selectively connecting and disconnecting the first and second input shafts (3, 4) to and from the output shaft (5) via one of the plurality of first gear trains (71A-76A. 71 P-76P);
a second gear train (77A, 77P) provided between the first input shaft (3, 4) and the output shaft (5) for transmitting the torque transmitted from the first input shaft (3, 4) to the output shaft (5);
a second connecting portion (77M, 85, 77X, 85X, 89) provided at the second gear train (77A, 77P) and connected to the second clutch actuator (26, 25), the second connecting portion (77M, 85, 77X, 85X, 89) operated by the second clutch actuator (26, 25) to connect and disconnect the first input shaft (3, 4) to and from the output shaft (5) via the second gear train (77A, 77P) when the second clutch actuator (26, 25) operates the second clutch portion (C2, C1) to interrupt the second torque transmitting path between the second input shaft (4, 3) and the output shaft (5).

2. A dual clutch type automated transmission apparatus (1, 1X) according to claim 1, wherein
the second clutch actuator (26, 25) operates the second connecting portion (77M, 85, 77X, 85X, 89) to connect the first input shaft (3, 4) to the output shaft (5) via the second gear train (77A, 77P) while interrupting the second torque transmitting path between the second input shaft (4, 3) and the output shaft (5), and
the first clutch actuator (25, 26) operates the first clutch portion (C1, C2) to establish the first torque transmitting path between the first input shaft (3, 4) and the output shaft (5) via the second gear train (77A, 77P).

3. A dual clutch type automated transmission apparatus (1, 1X) according to any of claims 1 and 2, wherein
the second clutch actuator (26, 25) is movable to a first actuating position and to a second actuating position from a neutral position,
the second torque transmitting path between the second input shaft (4, 3) and the output shaft (5) is established when the second clutch actuator (26, 25) is located at the first actuating position, and
the second connecting portion (77M, 85, 77X, 85X, 89) connects the first input shaft (3, 4) to the output shaft (5) when the second clutch actuator (26, 25) is located at the second actuating position.

4. A dual clutch type automated transmission apparatus (1, 1X) according to any of claims 1 to 3, wherein
the second gear train (77A, 77P) includes a reverse gear train.

5. A dual clutch type automated transmission apparatus (1) according to any of claims 1 to 4, wherein
the second connecting portion (77M, 85) includes a slidable engagement mechanism provided to be separated from the second gear train (77A, 77P), and
the slidable engagement mechanism slidably moves to engage with the second gear train (77A, 77P),
whereby the first input shaft (3, z4) and the output shaft (5) are connected to each other via the second gear train (77A, 77P), and the first torque transmitting path between the first input shaft (3, 4) and the output shaft (5) is established.

6. A dual clutch type automated transmission apparatus (1) according to claim 5, wherein the slidable engagement mechanism (77M, 85) includes:
an operating lever (88) connected to the second clutch actuator (26, 25);
a holder (87) provided at the operating lever (88); and
a shift arm (86) supported by the holder (87) and having a clearance (K) from the holder (87) so as to be movable relative to the holder (87).

7. A dual clutch type automated transmission apparatus (1X) according to any of claims 1 to 4, wherein
the second connecting portion (77X, 85X, 89) includes an idle gear (77X) and a synchronous connecting mechanism (85X, 89),
the idle gear (77X) is provided to engage with the second gear train (77A, 77P) and to idly rotate relative to a rotational shaft (6) onto which the idle gear (77X) is mounted,
the synchronous connecting mechanism (85X, 89) operates the idle gear (77X) to be synchronously connected to the rotational shaft (6),
whereby the first input shaft (3, 4) and the output shaft (5) are connected to each other via the second gear train (77A, 77P), and the first torque transmitting path between the first input shaft (3, 4) and the output shaft (5) is established.

8. A dual clutch type automated transmission apparatus (1X) according to claim 7, wherein the synchronous connecting mechanism (85X, 89) includes:
a synchromesh mechanism (89) provided to be separated from the second gear train (77A, 77P); and
a synchronous operating mechanism (85X) including:
an operating lever (88) connected to the second clutch actuator (26, 25);
a holder (87) provided at the operating lever (88); and
a shift arm (86X) for moving the synchromesh mechanism (89), the shift arm (86X) supported by the holder (87) and having a clearance (K) from the holder (87) so as to be movable relative to the holder (87),
and wherein the synchronous operating mechanism (85X) operates the synchromesh mechanism (89) to synchronously connect the idle gear (77X) to the rotational shaft (6),
whereby the idle gear (77X) rotates with the second gear train (77A, 77P), and whereby the first torque transmitting path between the first input shaft (3, 4) and the output shaft (5) is established.
